Europäisches Patentamt

European Patent Office

Office européen des brevets

(19)

(11) Veröffentlichungsnummer: **0 155 227**
**B1**

(12) **EUROPÄISCHE PATENTSCHRIFT**

(45) Veröffentlichungstag der Patentschrift: **07.11.90**

(51) Int. Cl.⁵: **B 60 C 27/06**

(21) Anmeldenummer: **85730041.2**

(22) Anmeldetag: **15.03.85**

(54) Reifenkette.

(30) Priorität: **16.03.84 DE 3410220**

(43) Veröffentlichungstag der Anmeldung:
**18.09.85 Patentblatt 85/38**

(45) Bekanntmachung des Hinweises auf die
Patenterteilung:
**07.11.90 Patentblatt 90/45**

(84) Benannte Vertragsstaaten:
**AT BE CH GB IT LI**

(56) Entgegenhaltungen:
**CH-A- 487 004**
**CH-A- 508 496**
**DE-A-1 480 879**
**DE-A-2 658 009**
**DE-A-2 706 621**
**FR-A-2 117 995**
**US-A-3 124 929**

(73) Patentinhaber: **RUD-Kettenfabrik Rieger & Dietz
GmbH u. Co.
Friedensinsel
D-7080 Aalen 1 (DE)**

(72) Erfinder: **Weidler, Erhard
Danziger Strasse 32
D-7080 Aalen-Unterkochen (DE)**

(74) Vertreter: **Böning, Manfred, Dr. Ing. et al
Patentanwälte Dipl.-Ing. Dieter Jander Dr. Ing.
Manfred Böning Kurfürstendamm 66
D-1000 Berlin 15 (DE)**

Courier Press, Leamington Spa, England.

## Beschreibung

Die Erfindung betrifft eine Reifenkette mit von jeweils mindestens drei stehend angeordneten, d.h. senkrecht zur Reifenfläche orientierten Vertikalgliedern und jeweils einem liegend angeordneten, d.h. parallel zur Reifenfläche orientiertem Horizontalglied gebildeten Knotenpunkten, bei der das Horizontalglied mindestens eines Knotenpunktes die Form eines Bügels mit einem im wesentlichen ringförmigen Hauptteil und zwei im Abstand voneinander angeordneten nach außen gerichteten Enden hat, welch letztere durch ein Verbindungsteil überbrückt sind.

Ein Kettennetz für Reieinefenkette der vorstehenden Art ist aus der DE-A-26 58 009 bekannt. Bei dem bekannten Kettennetz weist mindestens ein Knotenpunkt ein als Kettenschloß ausgebildetes Horizontalglied auf, in dessen ringförmigen Hauptteil die Vertikalglieder durch einen Einführschlitz einführbar sind, der anschliessend durch einen Schraubbolzen geschlossen wird, welcher die nach außen gerichteten mit fluchtenden Bohrungen zu seiner Aufnahme versehenen Enden eines auch den Hauptteil bildenden Bügels miteinander verbindet. Ein Knotenpunkt der vorstehenden Art bietet den Vorteil, daß sein Horizontalglied vor dem Zusammenfügen einer Wärmebehandlung unterworfen werden kann, die zu einer hinreichend großen Oberflächenhärte führt. Ein Aufspreizen oder späteres Zudrücken des Bügels vor bzw. nach dem Einhängen der Vertikalglieder erübrigt sich nämlich im Hinblick darauf, daß die Lage der Enden des Bügels bei oder nach dem Zusammenfügen der Glieder keiner Veränderung bedarf. Für den aufgezeigten Vorteil muß allerdings der Nachteil in Kauf genommen werden, daß sich ein Lösen des Verbindungselementes bei ungünstigen Belastungen nicht mit hinreichender Sicherheit ausschliessen läßt. Hinzu kommt, daß der Herstellungsaufwand für das beschriebene Kettenschloß vergleichsweise groß ist.

Die einem Kettenschloß innewohnende Gefahr eines ungewollten Öffnens entfällt, wenn das Horizontalglied eines Knotenpunktes nach dem Einhängen der Vertikalglieder durch Schweißen geschlossen wird. Reifenketten mit entsprechend ausgebildeten Knotenpunkten sind zur Genüge bekannt. Bei ihnen sind die Stirnseiten eines das Horizontalglied eines jeweiligen Knotenpunktes bildenden gebogenen Profilstababschnittes durch Widerstandsstumpfschweißung direkt miteinander verbunden. Eine solche Knotenpunktausbildung steht indessen, wie weiter oben bereits zum Ausdruck gebracht, einer zu einer ausreichend großen Oberflächenhärte des Horizontalgliedes führenden Wärmebehandlung vor dem Zusammenfügen der Glieder entgegen, da zum Einhängen der Vertikalglieder in das Horizontalglied ein vorheriges Aufspreizen und/oder nachträgliches Zusammenbiegen des Horizontalgliedes erforderlich ist und hierbei ein oberflächengehärteter Bügel insbesondere zur Bildung von Haarrissen neigt. In der Praxis wird in derartigen Fällen denn auch eine gemeinsame Wärmebehandlung aller Glieder nach dem Zuschweißen des jeweiligen Horizontalgliedes vorgenommen. Auch dies aber bringt Nachteile mit sich, die einerseits darin bestehen, daß man bezüglich der Auswahl unterschiedlicher Materialien für die Horizontal- und Vertikalglieder begrenzt ist und andererseits darin, daß die technischen Einrichtungen zur Wärmebehandlung eines Kettennetzes aufwendiger sind als solche zur Wärmebehandlung einzelner Kettenglieder. Im Hinblick auf die angedeuteten Schwierigkeiten bei geschweißten Kon struktionen haben sie sich trotz des Vorteils, daß ein unerwünschtes Lösen der Knotenpunkte bei ihnen nicht zu befürchten ist, nicht generell durchzusetzen vermocht.

Der Erfindung liegt die Aufgabe zugrunde, eine Rei fenkette der eingangs definierten Gattung zu schaffen, welche mindestens einen Knotenpunkt aufweist, dessen Horizontalglied einerseits vor der Knotenpunktsbildung einer zu einer hohen Oberflächenhärte führenden Wärmebehandlung unterworfen werden kann und andererseits bei leichter Herstellbarkeit die erwünschte Sicherheit gegen ein Auseinanderfallen des Knotenpunktes gewährleistet.

Diese Aufgabe wird bei einer Reifenkette der in Betracht gezogenen Art erfindungsgemäß dadurch gelöst, daß die Härte des Hauptteiles des Bügels grösser ist als die Härte mindestens der dem Verbindungsteil zugewandten Seiten seiner Enden und daß das Verbindungsteil pilzförmig ausgebildet ist und längs seines Schaftes durch Schweißnähte mit den Enden des Bügels verbunden ist.

Die erfindungsgemässe Reifenkette bietet den Vorteil, daß ihr im vorstehenden Sinne ausgebildeter Knotenpunkt mit einfachen Mitteln herstellbar ist, über eine große Festigkeit verfügt, nicht aufgehen kann und ein hohes Maß an Freizügigkeit bei der Wärmebehandlung zuläßt. Die nach außen gerichteten Enden des Bügels ermöglichen problemlos eine unterschiedliche Wärmebehandlung von Bügelhauptteil und Bügelenden. Während die Oberflächenhärte des Hauptteiles zur Erzielung einer großen Verschleißfestigkeit groß gewählt werden kann, bleiben die Bügelenden vergleichsweise weich, um den Schweißvorgang nicht zu beeinträchtigen. Durch die Verwendung eines pilzförmigen, d.h. eines einen über den Schaft vorstehenden Kopf aufweisenden Verbindungsteiles, erhält man einen Verschleißschutz sowohl für die Enden des Bügels als auch für die Schweißnähte. Darüberhinaus ermöglicht bzw. erleichtert die pilzförmige Ausbildung des Verbindungsteiles die Herstellung langer und fester Schweißnähte.

Weitere Merkmale und Einzelheiten der Erfindung ergeben sich aus den Unteransprüchen und der nachfolgenden Beschreibung zweier in der beigefügten Zeichnung dargestellter Knotenpunkte einer Reifenkette. Es zeigen:

Figur 1 die Draufsicht auf einen ersten Knotenpunkt,

Figur 2 die Draufsicht auf einen zweiten Knotenpunkt,

Figur 3 einen Schnitt längs der Linie III—III in Figur 2,

Figur 4 Einzelheiten des Bügels eines Knotenpunktes,

Figur 5 einen Schnitt längs der Linie V—V in Figur 4,

Figur 6 einen der Figur 5 entsprechenden Querschnitt eines abgewandelten Bügels,

Figur 7 ein Verbindungsteil für die Enden des Bügels,

Figur 8 eine Einzelheit eines weiteren Knotenpunktes,

Figur 9 einen Schnitt längs der Linie IX—IX in Figur 8,

Figur 10 einen modifizierten Bügelquerschnitt,

Figur 11 einen weiteren modifizierten Bügelquerschnitt und

Figur 12 ein Verbindungsteil für den Bügel gemäß Figur 8.

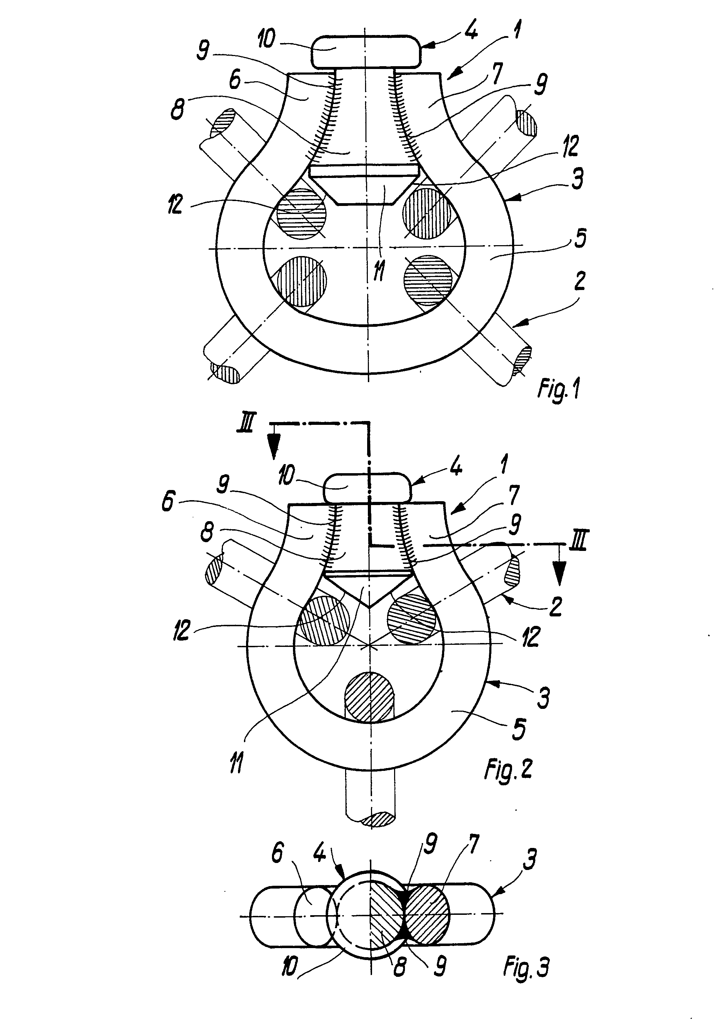

In Figur 1 ist der Knotenpunkt einer Reifenkette dargestellt, der aus einem allgemein mit 1 bezeichneten Horizontalglied und vier allgemein mit 2 bezeichneten Vertikalgliedernbesteht. Das Horizontalglied 1 wird von einem Bügel 3 und einem Verbindungsteil 4 gebildet. Der Bügel 3 hat einen elliptischen Hauptteil 5 und zwei im Abstand voneinander angeordnete Enden 6 und 7. Die einander zugewandten Seiten der Enden 6 und 7 sind mit einem Schaft 8 des Verbindungsteiles 4 durch vier Schweißnähte 9 verbunden. Der Kopf 10 und der Fuß 11 des Verbindungsteiles 4 haben den gleichen Durchmesser und stehen, senkrecht zur Zeichenebene betrachtet, über die Enden 6 und 7 vor. Durch die kegelstumpfförmige Ausbildung des Fußes 11 erhält man Anschlagflächen 12 für die in das Horizontalglied 1 eingehängten Vertikalglieder 2. Durch die spezielle Form des Schaftes 8 des Verbindungsteiles 4, d.k. durch seinen vom Kopf 10 zum Fuß 11 kontinuierlich ansteigenden Querschnitt, erhält man günstige Spannungsverhältnisse im Bereich der Schweißnähte 9, die das Verbindungsteil 4 mit dem Bügel 3 verbinden.

In den Figuren 2 und 3 ist ein ähnlich aufgebauter Knotenpunkt dargestellt. Für Teile, die den Teilen des Knotenpunktes der Figur 1 entsprechen, werden gleiche Bezugszeichen verwendet. Die Unterschiede zu dem zuerst beschriebenen Knotenpunkt bestehen darin, daß das Hauptteil 5 in diesem Fall kreisförmig ausgebildet ist und in den Bügel 3 lediglich drei Vertikalglieder eingehängt sind. Außerdem ist der Fuß 11 des Verbindungsteiles 4 nicht kegelstumpfförmig sondern kegelig ausgebildet.

Figur 3 zeigt, daß der Kopf 10 des Verbindungsteiles 4 nach oben und unten über den Bügel 3 vorsteht und auf diese Weise die Enden 6 und 7 sowie die Schweißnähte 9 gegen Verschleißangriffe schützt. Man erkennt außerdem deutlich die günstige Form der Schweißnähte, die aus der gewählten Querschnittsform des Schaftes 8 und der Enden 6 und 7 des Bügels 3 resultiert.

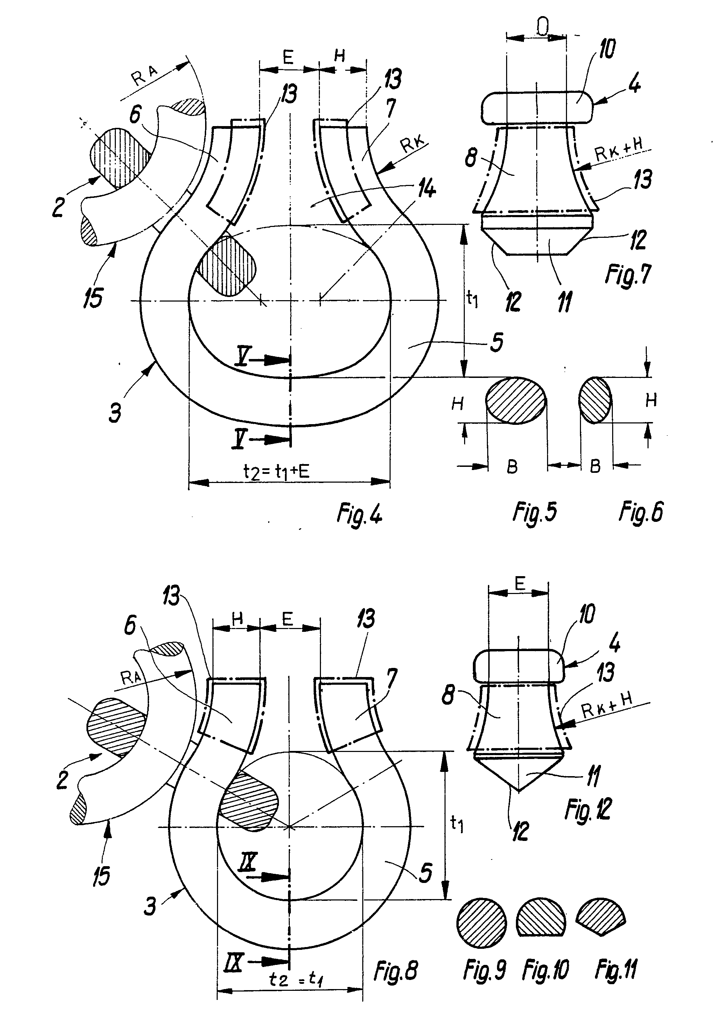

Die Figuren 4, 5 und 7 zeigen Teile eines dem Knotenpunkt gemäß Figur 1 entsprechenden Knotenpunktes vor dem Schliessen. In den Figuren 4 und 7 sind durch strichpunktierte Linien jeweils Zonen 13 geringer Oberflächenhärte gekennzeichnet. Außerhalb der durch die strichpunktierten Linien angedeuteten weichen Zonen sind die dargestellten Teile zur Erhöhung ihrer Verschleißfestigkeit gegen äußere Einflüsse und gegen Gelenkverschleiß gehärtet.

Ein Vergleich der Figuren 4 und 7 zeigt, daß die Kontur des Schaftes 8 des Verbindungsteiles 4 an die Kontur der ihm zugewandten Seiten der Enden 6 und 7 des Bügels 3 angepaßt ist. Der kleinste Durchmesser des Schaftes 8 entspricht mit anderen Worten der Weite E des Einführschlitzes 14 an seiner engsten Stelle. Das Verbindungsteil 4 ist vorzugsweise als Drehteil ausgebildet. Der Schaft 8 hat einen Krümmungsradius, der gleich $R_K + H$ ist, wobei $R_K$ der äußere Krümmungsradius der Enden 6 und 7 ist und H die Höhe des Querschnittes des Bügels 3, wie dies in Figur 5 angedeutet ist, in der die Breite des Querschnittes mit B bezeichnet ist. Der Krümmungsradius $R_K$ seinerseits entspricht im wesentlichen gleich dem Außenradius $R_R$ von Horizontalgliedern 15, die sich an den jeweiligen Knotenpunkt anschliessen. Die größte Teilung $t_2$ des Bügels 3 sollte höchstens gleich der kleinste Teilung $t_1 + E$ sein.

Figur 6 zeigt einen modifizierten Querschnitt eines Bügels 3.

Für die Figuren 8, 9 und 12 gilt im wesentlichen das Gleiche wie für die Figuren 4, 5 und 7, so daß zur Vermeidung von Wiederholungen auf das oben bereits Gesagte verwiesen werden kann. In beiden dargestellten Ausführungsbeispielen hat — was ergänzend bemerkt werden darf — der Kopf 10 des Verbindungsteiles 4 jeweils den gleichen Außendurchmesser wie der Fuß 11 des Verbindungsteiles.

Die Figuren 10 und 11 schließlich zeigen abgewandelte Querschnittsformen für Bügel 3.

In der Praxis haben die Bügel 3 im Bereich ihrer Hauptteile eine Härte von mehr als 700 HV. Entsprechendes gilt für die Köpfe und Füße der Verbindungsteile. Die Festigkeit des Schaftes der Verbindungsteile entspricht demgegenüber der Festigkeit vergüteter Stähle.

**Patentansprüche**

1. Reifenkette mit von jeweils mindestens drei stehend angeordneten, d.h. senkrecht zur Reifen fläche orientierten Vertikalgliedern (2) und jeweils einem liegend angeordneten, d.h. parallel zur Reifenfläche orientiertem Horizontalglied (1) gebildeten Knotenpunkten, bei der das Horizontalglied (1) mindestens eines Knotenpunktes die Form eines Bügels (3) mit einem im wesentlichen ringförmigen Hauptteil (5) und zwei im Abstand voneinander angeordneten nach außen gerichteten Enden (6, 7) hat, welch letztere durch ein Verbindungsteil (4) überbrückt sind, dadurch gekennzeichnet, daß die Härte des Hauptteiles (5) des Bügels (3) größer ist als die Härte mindestens der dem Verbindungsteil (4) zugewandten Seiten seiner Enden (6, 7), und daß das Verbindungsteil (4) pilzförmig ausgebildet und längs seines Schaftes (8) durch Schweißnähte (9) mit den Enden (6, 7) des Bügels (3) verbunden ist.

2. Reifenkette nach Anspruch 1, dadurch gekennzeichnet, daß der Kopf (10) und der Fuß (11) des Verbindungsteiles (4) eine größere Härte aufweisen als sein Schaft (8).

3. Reifenkette nach Anspruch 1 oder 2, dadurch gekennzeichnet, daß die Kontur des Schaftes (8) des Verbindungsteiles (4) an die Kontur der ihm zugewandten Seiten der Enden (6, 7) des Bügels (3) angepaßt ist.

4. Reifenkette nach einem der Ansprüche 1 bis 3, dadurch gekennzeichnet, daß das Verbindungsteil (4) rotationssymmetrisch ausgebildet und durch V-förmige Schweißnähte (9) mit den Enden (6, 7) des Bügels (3) verbunden ist.

5. Reifenkette nach Anspruch 4, dadurch gekennzeichnet, daß das Verbindungsteil (4) als Drehteil ausgebildet ist.

6. Reifenkette nach einem der Ansprüche 1 bis 5 dadurch gekennzeichnet, daß der Bügel (3) aus einem Profilstahlabschnitt gebogen ist.

7. Reifenkette nach einem der Ansprüche 1 bis 6, dadurch gekennzeichnet, daß der Hauptteil (5) des Bügels (3) kreisrund ist (Fig. 2, 3, 8).

8. Reifenkette nach einem der Ansprüche 1 bis 6, dadurch gekennzeichnet, daß der Hauptteil (5) des Bügels (3) elliptisch ist (Fig. 1, 4).

9. Reifenkette nach Anspruch 8, dadurch gekennzeichnet, daß die größere Teilung ($t_2$) des Bügels (3) höchstens um einen Betrag größer ist, der gleich dem kleinsten Abstand (E) der Enden (6, 7) des Bügels (3) voneinander ist.

10. Reifenkette nach einem der Ansprüche 1 bis 9, dadurch gekennzeichnet, daß die Enden (6, 7) des Bügels (3) gekrümmt sind, wobei der Krümmungsradius ($R_K$) etwa gleich dem äußeren Radius ($R_R$) benachbarter Horizontalglieder (15) ist.

11. Reifenkette nach einem der Ansprüche 1 bis 10, dadurch gekennzeichnet, daß der Hauptteil (5) des Bügels (3) eine Härte von mehr als 700 HV aufweist.

12. Reifenkette nach einem der Ansprüche 1 bis 11, dadurch gekennzeichnet, daß der Kopf (10) und der Fuß (11) des Verbindungsteiles (4) Durchmesser haben, die größer sind als die Höhe (H) des Querschnittes der Enden (6,7) des Bügels (3).

13. Reifenkette nach Anspruch 12, dadurch gekennzeichnet, daß die Durchmesser des Kopfes (10) und des Fußes (11) des Verbindungsteiles (4) gleich sind.

14. Reifenkette nach einem der Ansprüche 1 bis 13, dadurch gekennzeichnet, daß der Fuß (11) des Verbindungsteiles (4) mit Anschlagflächen (12) für Vertikalglieder (2) versehen ist.

15. Reifenkette nach einem der Ansprüche 1 bis 14 dadurch gekennzeichnet, daß der Querschnitt des Schaftes (8) des Verbindungsteiles (4) vom Kopf (10) zum Fuß (11) zunimmt.

16. Reifenkette nach einem der Ansprüche 1 bis 15, dadurch gekennzeichnet, daß sämtliche Knotenpunkte ihres Laufnetzes von Horizontalgliedern (1) gebildet werden, die die Form eines Bügels (3) haben, dessen Enden (6, 7) durch ein eingeschweißtes pilzförmiges Verbindungsteil (4) miteinander verbunden sind.

**Revendications**

1. Chaîne à neige pour pneu comportant des noeuds d'assemblage formés chacun d'au moins trois éléments verticaux (2) disposés debout, c'est-à-dire orientés perpendiculairement par rapport à la surface du pneu et d'un élément horizontal (1) disposé couché, c'est-à-dire orienté parallèlement à la surface du pneu, dans lequel l'élément horizontal (1) d'au moins un noeud d'assemblage a la forme d'un étrier (3) comportant une partie principale (5) essentiellement en forme d'anneau et deux extrémités (6, 7) disposées à distance l'une de l'autre et dirigées vers l'extérieur, ces dernières étant réunies par une pièce de liaison (4), caractérisée en ce que la dureté de la partie principale (5) de l'étrier (3) est au moins supérieure à la dureté des côtés dirigés vers la pièce de liaison (4) de ces extrémités (6, 7) et en ce que la pièce de liaison (4) est conformée en forme de champignon et est reliée le long de sa tige avec les extrémités (6, 7) de l'étrier (3) au moyen de cordons de soudure (9).

2. Chaîne selon la revendication 1, caractérisée en ce que la tête (10) et le pied (11) de la pièce de liaison (4) présentent une dureté supérieure à celle de sa tige (8).

3. Chaîne selon la revendication 1 ou 2, caractérisée en ce que le contour de la tige (8) de la pièce de liaison (4) est adapté au contour des côtés qui lui font face des extrémités (6, 7) de l'étrier (3).

4. Chaîne selon l'une des revendications 1 à 3, caractérisée en ce que la pièce de liaison est conformée de manière à présenter une symétrie en rotation et est reliée avec les extrémités (6, 7) de l'étrier (3) au moyen de cordons de soudure (9) en forme de V.

5. Chaîne selon la revendication 4, caractérisée en ce que la pièce de liaison (4) est conformée en forme de pièce rotative.

6. Chaîne selon l'une des revendications 1 à 5, caractérisée en ce que l'étrier (3) est cintré à partir d'une section d'acier profilé.

7. Chaîne selon l'une des revendications 1 à 6, caractérisée en ce que la partie principale (5) de l'étrier a une section ronde (Fig. 2, 3, 8).

8. Chaîne selon l'une des revendications 1 à 6, caractérisée en ce que la partie principale (5) de l'étrier (3) est de forme elliptique (Fig. 1, 4).

9. Chaîne selon la revendication 8, caractérisée en ce que l'écartement le plus grand ($t_2$) de l'étrier (3) est au maximum supérieur d'une valeur qui est égale à la distance la plus petite E qui sépare les extrémités (6, 7) de l'étrier (3).

10. Chaîne selon l'une des revendications 1 à 9, caractérisée en ce que les extrémités (6, 7) de l'étrier (3) sont courbées, le rayon de courbure ($R_K$) étant approximativement égal au rayon extérieur ($R_R$) des éléments horizontaux voisins (15).

11. Chaîne selon l'une des revendications 1 à 10, caractérisée en ce que la partie principale de l'étrier présente une dureté de plus de 700 HV.

12. Chaîne selon l'une des revendications 1 à 11, caractérisée en ce que la tête (10) et le pied (11) de la pièce de liaison (4) présentent des diamètres qui sont supérieurs à la hauteur (H) de la section des extrémités (6, 7) de l'étrier (3).

13. Chaîne selon la revendication 12, caractérisée en ce que les diamètres de la tête (10) et du pied (11) de la pièce de liaison (4) sont égaux.

14. Chaîne selon l'une des revendications 1 à 13, caractérisée en ce que le pied (11) de la pièce de liaison (4) est muni de surfaces de butée (12) pour les éléments verticaux (2).

15. Chaîne selon l'une des revendication 1 à 14, caractérisée en ce que la section de la tige (8) de la pièce de liaison (4) est croissante de la tête (10) vers le pied (11).

16. Chaîne selon l'une des revendications 1 à 15, caractérisée en ce que tous les points d'assemblage de son réseau de roulement sont constitués d'éléments horizontaux (1) qui ont la forme d'un étrier (3) dont les extrémités (6, 7) sont reliées entre-elles au moyen d'une pièce de liaison en forme de champignon qui y est soudée.

## Claims

1. An anti-skid chain comprising joints each made up of at least three vertical links (2) disposed at right angles to the tyre surface and one horizontal link (1) disposed parallel to the tyre surface, the horizontal link (1) of at least one joint being in the form of a bent part (3) comprising a substantially annular main part (5) and two spaced-apart outwardly-directed ends (6, 7) which are bridged by a connecting part (4), characterised in that the hardness of the main part (5) of the bent part (3) is greater than the hardness at least on the sides of the ends (6, 7) facing the connecting part (4), and the connecting part (4) is mushroom-shaped and connected along its shank (8) by weld seams (9) to the ends (6, 7) of the bent part (3).

2. An anti-skid chain according to claim 1, characterised in that the head (10) and the foot (11) of the connecting part (4) are harder than its shank (8).

3. An anti-skid chain according to claim 1 or 2, characterised in that the contour of the shank (8) of the connecting part (4) is matched to the contour of the facing sides of the ends (6, 7) of the bent part (3).

4. An anti-skid chain according to any of claims 1 to 3, characterised in that the connecting part (4) is made axially symmetrical and is connected by V-shaped weld seams (9) to the ends (6, 7) of the bent part (3).

5. An anti-skid chain according to claim 4, characterised in that the connecting part (4) is a turned part.

6. An anti-skid chain according to any of claims 1 to 5, characterised in that the bent part (3) is a bent portion of sectional steel.

7. An anti-skid chain according to any of claims 1 to 6, characterised in that the main part (5) of the bent part (3) is circular (Figs. 2, 3 and 8).

8. An anti-skid chain according to any of claims 1 to 6, characterised in that the main part (5) of the bent part (3) is elliptical (Figs. 1 and 4).

9. An anti-skid chain according to claim 8, characterised in that the greater spacing ($t_2$) of the bent part (3) is greater at most by an amount which is equal to the smallest distance (E) between the ends (6, 7) of the bent part (3).

10. An anti-skid chain according to any of claims 1 to 9, characterised in that the ends (6, 7) of the bent part (3) are curved, the radius of curvature ($R_K$) being approximately equal to the outer radius ($R_R$) of adjacent horizontal links (15).

11. An anti-skid chain according to any of claims 1 to 10, characterised in that the main part (5) of the bent part (3) has a hardness of more than 700 HV.

12. An anti-skid chain according to any of claims 1 to 11, characterised in that the head (10) and the foot (11) of the connecting part (4) have diameters which are greater than the height (H) of the cross-section of the ends (6, 7) of the bent part (3).

13. An anti-skid chain according to claim 12, characterised in that the diameters of the head (10) and the foot (11) of the connecting part (4) are equal.

14. An anti-skid chain according to any of claims 1 to 13, characterised in that the foot (11) of the connecting part (4) is provided with abutment surfaces (12) for vertical links (2).

15. An anti-skid chain according to any of claims 1 to 14, characterised in that the cross-section of the shank (8) of the connecting part (4) decreases from the head (10) to the foot (11).

16. An anti-skid chain according to any of claims 1 to 15, characterised in that all the joints in its tread network are formed by horizontal links (1) which are in the form of a bent part (3) having ends (6, 7) connected by a welded mushroom-shaped connecting part (4).

EP 0 155 227 B1

Fig. 1

Fig. 2

Fig. 3

1

Fig. 4

Fig. 5

Fig. 6

Fig. 7

Fig. 8

Fig. 9

Fig. 10

Fig. 11

Fig. 12

2